(19) Europäisches Patentamt
European Patent Office
Office européen des brevets

(11) **EP 4 220 259 A1**

(12) **EUROPÄISCHE PATENTANMELDUNG**

(43) Veröffentlichungstag:
02.08.2023  Patentblatt 2023/31

(21) Anmeldenummer: 23152328.3

(22) Anmeldetag: **19.01.2023**

(51) Internationale Patentklassifikation (IPC):
**G02B 6/32** (2006.01)     **G02B 6/38** (2006.01)

(52) Gemeinsame Patentklassifikation (CPC):
**G02B 6/3853; G02B 6/32**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **28.01.2022  DE 102022102057**

(71) Anmelder: **HUBER+SUHNER Cube Optics AG
55129 Mainz (DE)**

(72) Erfinder:
• **Smaglinski, Ingo
55131 Mainz (DE)**
• **Petigk, Thomas
65428 RÜSSELSHEIM (DE)**

(74) Vertreter: **WSL Patentanwälte Partnerschaft mbB
Kaiser-Friedrich-Ring 98
65185 Wiesbaden (DE)**

(54) **LICHTWELLENLEITERSTECKER SOWIE LICHTWELLENLEITERVERBINDER MIT EINEM SOLCHEN**

(57)  Die vorliegende Erfindung betrifft einen Lichtwellenleiterstecker für einen Lichtwellenleiterverbinder zum optischen Verbinden eines ersten Lichtwellenleiters mit einem zweiten Lichtwellenleiter, wobei der Lichtwellenleiterstecker einen Endabschnitt des ersten Lichtwellenleiters mit einer Lichtwellenleiterstirnfläche hält und eine Linse mit einer Eintrittsfläche, die dem ersten Lichtwellenleiter zugewandt ist, und einer Austrittsfläche, die dem ersten Lichtwellenleiter abgewandt ist, wobei die Linse derart ausgebildet und angeordnet ist, dass ein aus dem ersten Lichtwellenleiter austretendes Strahlenbündel auf die Eintrittsfläche tritt und als konvergentes Strahlenbündel auf die Austrittsfläche projiziert wird. Die vorliegende Erfindung betrifft weiterhin einen Lichtwellenleiterverbinder zum optischen Verbinden eines ersten Lichtwellenleiters mit einem zweiten Lichtwellenleiter, mit einem ersten Lichtwellenleiterstecker, in welchem ein Endabschnitt des ersten Lichtwellenleiters mit einer ersten Lichtwellenleiterstirnfläche gehalten ist, und einem zweiten Lichtwellenleiterstecker, in welchem ein Endabschnitt des zweiten Lichtwellenleiters mit einer zweiten Lichtwellenleiterstirnfläche gehalten ist, wobei zwischen der ersten Lichtwellenleiterstirnfläche und der zweiten Lichtwellenleiterstirnfläche eine Linse derart angeordnet ist, dass ein aus der ersten Lichtwellenleiterstirnfläche austretender Lichtstrahl auf die zweite Lichtwellenleiterstirnfläche abgebildet wird.

Fig. 1

EP 4 220 259 A1

**Beschreibung**

Die vorliegende Erfindung betrifft einen Lichtwellenleiterverbinder sowie einen Lichtwellenleiterstecker für einen Lichtwellenleiterverbinder zum optischen Verbinden von zwei Lichtwellenleitern.

Lichtwellenleiter sind Leitungen zur Übertragung von Lichtsignalen. Lichtwellenleiter weisen häufig Fasern aus Quarzglas auf. Sie werden umgangssprachlich auch als Glasfaserkabel bezeichnet, selbst wenn keine Fasern aus Glas enthalten sind.

Solche Lichtwellenleiter werden insbesondere in der Nachrichtentechnik zur Übertragung von Informationssignalen eingesetzt. Solche Lichtwellenleiter sind jedoch nicht unendlich lang, sodass es notwendig ist, mehrere Lichtwellenleiter miteinander zu verbinden. Zur Verbindung kommen häufig Steckverbindungen oder Spleißverbindungen zum Einsatz. Beim Spleißen werden die Faserenden zweier zu verbindender Lichtwellenleiter aufgeschmolzen und aneinandergeschoben. Die Steckverbinder dienen in der Regel zur lösbaren Verbindung von Lichtwellenleitern. Meist kommen hier Stecker-Stecker-Verbindungen zum Einsatz, die derart konstruiert sind, dass eine möglichst geringe Signaldämpfung erfolgt. Allerdings werden im Stand der Technik immer Lichtwellenleiter mit gleichen für die Signalübertragung nutzbaren Durchmessern (Felddurchmesser) miteinander verbunden.

Üblicherweise wird zwischen Monomode-Lichtwellenleitern und Multimode-Lichtwellenleitern unterschieden. Diese unterscheiden sich jedoch in ihren Felddurchmessern.

Es sind allerdings seit einiger Zeit auch Hohlfasern bekannt, welche im Querschnitt einen oder mehrere Hohlräume aufweisen. Auch diese können zur Leitung von Licht verwendet werden. Solche Hohlfasern, die auch Hohlkernfasern genannt werden, haben prinzipiell Vorteile gegenüber Vollkernfasern. Allerdings lassen sich die Hohlkernfasern erst in letzter Zeit zu akzeptablen Kosten in großen Längen und ausreichender Qualität herstellen. Daher wurden und werden nach wie vor Vollkernlichtwellenleiter eingesetzt.

Es gibt bereits optische Signalübertragungssysteme, die Hohlfasern einsetzen. Allerdings ist es nicht einfach, mehrere Hohlfasern miteinander zu verbinden. Darüber hinaus ist es nicht bekannt, eine Hohlkernfaser mit einer Vollkernfaser steckbar zu koppeln, sodass die Lichtwellenleiter nicht in Kombination eingesetzt werden können. Dies liegt unter anderem daran, dass der für die Lichtübertragung nutzbare Durchmesser (Felddurchmesser) bei den Hohlkernfasern etwa doppelt so groß ist wie der Felddurchmesser bei den Vollkernfasern. Dies hat die Verbreitung von Hohlkernfasern gebremst.

Ausgehend von dem beschriebenen Stand der Technik ist es daher Aufgabe der vorliegenden Erfindung, eine Verbindungstechnik anzugeben, mit der sowohl Hohlkernlichtwellenleiter miteinander als auch Lichtwellenleiter mit unterschiedlichen Felddurchmessern, wie z.B. ein Vollkernlichtwellenleiter mit einem Hohlkernlichtwellenleiter, verbunden werden können.

Hinsichtlich des Lichtwellenleitersteckers wird diese Aufgabe dadurch gelöst, dass der Lichtwellenleiterstecker einen Endabschnitt eines ersten Lichtwellenleiters mit einer ersten Lichtwellenleiterstirnfläche hält und eine Linse mit einer Eintrittsfläche, die dem Lichtwellenleiter zugewandt ist, und einer Austrittsfläche, die dem ersten Lichtwellenleiter abgewandt ist, aufweist. Dabei ist die Linse derart ausgebildet und angeordnet, dass ein aus dem ersten Lichtwellenleiter austretendes Strahlenbündel auf die Eintrittsfläche der Linse tritt und als konvergentes Strahlenbündel auf die Austrittsfläche der Linse projiziert wird.

Eine von dem Strahlenbündel getragene Information wird somit aus dem ersten Lichtwellenleiter auf die Austrittsfläche projiziert und kann dort weiter verarbeitet oder weitergeleitet werden.

Dabei ist es besonders bevorzugt, wenn das Strahlenbündel auf die Austrittsfläche der Linse fokussiert wird.

Vorzugsweise ist der Durchmesser des Strahlenbündels auf der Austrittsfläche kleiner als $100 \mu m$, besonders bevorzugt kleiner als $25\ \mu m$ und am besten kleiner als $10\ \mu m$.

In einer bevorzugten Ausführungsform ist der erste Lichtwellenleiter ein Hohlkernlichtwellenleiter.

In einer bevorzugten Anordnung entspricht die Austrittsfläche der Linse im Wesentlichen einer Austrittsfläche eines zweiten Lichtwellenleiters, z.B. eines Vollkernlichtwellenleiters, sodass, wenn die Fokussierung entsprechend gewählt wird, das gesamte Lichtsignal auf einen Abschnitt der Austrittsfläche fokussiert wird, dessen Ausdehnung im Wesentlichen der typischen Ausdehnung des Kerns des zweiten Lichtwellenleiters entspricht. Durch die geeignete Wahl der Linse kann das Lichtsignal auf den Kerndurchmesser des zweiten Lichtwellenleiters angepasst werden, in welchen eine Signalübertragung erfolgen soll.

Die Austrittsfläche der Linse ist in einer bevorzugten Ausführungsform konvex gekrümmt.

Der Lichtwellenstecker kann für beide Signalübertragungsrichtungen verwendet werden. Wird nämlich an der Austrittsfläche der Linse ein Lichtsignal z.B. durch einen als Vollkernlichtwellenleiter ausgebildeten zweiten Lichtwellenleiter bereitgestellt, wird dieses durch die Linse auf die Stirnfläche des z.B. als Hohlkernlichtwellenleiter ausgebildeten ersten Lichtwellenleiter abgebildet.

Um die folgende Beschreibung der Erfindung zu vereinfachen, wird im Folgenden lediglich der Fall beschrieben, dass ein Lichtsignal von dem als Hohlkernlichtwellenleiter ausgebildeten ersten Lichtwellenleiter bereitgestellt wird und auf die Austrittsfläche der Linse fokussiert wird. Der Lichtwellenleiterstecker kann aber auch in umgekehrter Signalübertragungsrichtung verwendet werden. Auch kann anstelle des Hohlkernlichtwellenleiters eine Monomode- oder Multimode-Glasfaser als erster Lichtwellenleiter vorgesehen sein.

In einer bevorzugten Ausführungsform ist vorgesehen, dass der Lichtwellenleiterstecker ein Grundelement mit einer Eingangs- und einer Ausgangsfläche, zwischen denen sich ein Durchgangskanal erstreckt, aufweist, wobei sowohl Endabschnitt des Hohlkernlichtwellenleiters als auch zumindest ein Abschnitt der Linse in dem Durchgangskanal angeordnet sind. Dabei ist die Linse näher an der Ausgangsfläche angeordnet als der Endabschnitt des Hohlkernlichtwellenleiters.

Durch die Anordnung im Durchgangskanal wird sichergestellt, dass es zwischen der Stirnfläche des Hohlkernlichtwellenleiters und der Eintrittsfläche keinerlei äußere Einflüsse, wie z.B. durch Staub oder Feuchtigkeit, gibt. Dadurch wird die Signalstärke des Lichtsignals praktisch nicht reduziert. Es kann von Vorteil sein, wenn der Durchgangskanal versiegelt wird, d.h. sowohl der Endabschnitt des Hohlkernlichtwellenleiters als auch die Linse den Durchgangskanal von beiden Seiten abdichten.

In einer weiteren bevorzugten Ausführungsform ist vorgesehen, dass der Durchgangskanal zwei Abschnitte mit unterschiedlichem Querschnitt aufweist, wobei der Endabschnitt des Hohlkernlichtwellenleiters zumindest teilweise in dem Abschnitt mit kleinerem Querschnitt und die Linse in dem Abschnitt mit größerem Querschnitt angeordnet ist. Um eine wirksame Fokussierung des Lichtsignals auf die Austrittsfläche zu bewirken, muss die Linse in der Regel einen bestimmten Mindestdurchmesser aufweisen. Daher hat die Linse meist einen größeren Querschnitt als der Hohlkernlichtwellenleiter. Der Durchgangskanal kann daher in dem Bereich, in welchem der Hohlkernlichtwellenleiter geführt wird, einen kleineren Querschnitt aufweisen. Dies vereinfacht die Fixierung des Hohlkernlichtwellenleiters innerhalb des Durchgangskanals. Der Durchgangskanal kann einen Anschlag für die Linse aufweisen, an welchem die Linse anliegt, so dass eine Bewegung der Linse in Richtung des Hohlkernlichtwellenleiters verhindert wird. Alternativ oder in Kombination hierzu kann der Durchgangskanal einen Anschlag für den Hohlkernlichtwellenleiter aufweisen, an welchem der Hohlkernlichtwellenleiter anliegt, so dass eine Bewegung des Hohlkernlichtwellenleiters in Richtung der Linse verhindert wird. Alternativ oder in Kombination hierzu kann der Anschlag auch derart ausgebildet sein, dass er eine laterale Bewegung zwischen Linse und/oder Hohlkernlichtwellenleiter relativ zum Durchgangskanal im Wesentlichen und am besten vollständig verhindert.

Solche Anschläge können durch Durchgangskanalabschnitte mit unterschiedlichen Querschnitten verwirklicht werden. Wenn das Grundelement und insbesondere der darin eingebrachte Durchgangskanal präzise gefertigt sind, kann die Justierung von Hohlkernlichtwellenleiter und Linse allein dadurch erfolgen, dass die betreffenden Elemente am jeweiligen Anschlag positioniert werden.

In einer weiteren bevorzugten Ausführungsform ist vorgesehen, dass die Austrittsfläche der Linse den Durchgangskanal an der Ausgangsfläche verschließt und zwar am besten bündig. Durch diese Maßnahme wird zum einen sichergestellt, dass sich keine Verunreinigungen im Durchgangskanal sammeln. Zum anderen kann, ohne dass der Durchgangskanal einen störenden Einfluss hat, auf die Austrittsfläche der Linse zugegriffen werden, z.B. um diese zu reinigen.

In einer weiteren bevorzugten Ausführungsform ist vorgesehen, dass das Grundelement einen Querkanal aufweist, welcher den Durchgangskanal schneidet, wobei vorzugsweise der Querkanal das Grundelement vollständig durchquert. Auch wenn der Querkanal nicht unbedingt im rechten Winkel zu dem Durchgangskanal verlaufen muss, ist dies in der Regel die bevorzugte Ausführungsform. Durch den Querkanal kann von außen in den Durchgangskanal eingegriffen werden, um den Hohlkernlichtwellenleiter innerhalb des Durchgangskanals zu justieren und beispielsweise mithilfe von Klebstoff zu fixieren. Sobald Hohlkernlichtwellenleiter und Linse exakt relativ zueinander positioniert sind, kann der Hohlkernlichtwellenleiter innerhalb des Durchgangskanals fixiert, z.B. verklebt, werden.

In einer besonders bevorzugten Ausführungsform ist daher in dem Querkanal eine Justiervorrichtung zum Justieren des Endabschnittes des Hohlkernlichtwellenleiters angeordnet. Diese Justiervorrichtung kann ein Hülsenelement mit einer Querbohrung oder einer Querausnehmung aufweisen, wobei der Endabschnitt des Hohlkernlichtwellenleiters durch die Querbohrung bzw. die Querausnehmung geführt ist. Wird nun das Hülsenelement relativ zum Querkanal und damit auch relativ zum Durchgangskanal bewegt, führt dies zu einer Bewegung des Endabschnittes des Hohlkernlichtwellenleiters innerhalb des Durchgangskanals, wodurch der Endabschnitt des Hohlkernlichtwellenleiters justiert werden kann. Dafür kann der Hohlkernlichtwellenleiter mit einem Signal beaufschlagt werden und der auf die Austrittsfläche projizierte Lichtfleck beobachtet werden. Sobald dieser Lichtfleck die gewünschten Eigenschaften (Position auf der Austrittsfläche, Durchmesser des Lichtfleckes) hat, d. h. sobald der Hohlkernlichtwellenleiter die gewünschte Relativposition zur Eintrittsfläche der Linse eingenommen hat, kann der Endabschnitt innerhalb des Durchgangskanals verklebt werden.

Es ist beispielsweise möglich, dass das Hülsenelement sowie der Durchgangskanal zumindest abschnittsweise in dem Bereich, in welchem der Endabschnitt des Hohlkernlichtwellenleiters angeordnet ist, mit Klebstoff gefüllt sind. In diesem Fall verbleibt das Hülsenelement nach der Justierung im Lichtwellenleiterstecker.

Es ist auch möglich, das Hülsenelement zweiteilig aufzubauen, wobei die beiden Teile von unterschiedlichen Richtungen des Querkanals kommend den Endabschnitt des Hohlkernlichtwellenleiters zwischen sich führen. Diese Ausführungsform erleichtert die Einbringung von dem Endabschnitt des Hohlkernlichtwellenleiters und des Hülsenelementes.

In einer weiteren bevorzugten Ausführungsform ist vorgesehen, dass die Stirnfläche des Hohlkernlichtwellenleiters und die Linse voneinander beabstandet angeordnet sind. Dadurch werden die Abbildungseigenschaften der Linse verbessert. Insbesondere können dadurch Rückreflexionen reduziert werden. In einer bevorzugten Ausführungsform weist die Linse eine Antireflexbeschichtung auf. Eine Antireflexbeschichtung kann auf der Eintrittsfläche und/oder der Austrittsfläche angeordnet sein. Hat die Linse einen Brechungsindex nu und das im Durchgangskanal angeordnete Medium, d.h. in der Regel Luft, eine Brechungsindex $n_m$, so ergibt sich der Brechungsindex n, der Antireflexschicht, die auf der Eintrittsfläche aufgebracht ist, zu $n_1 = \sqrt{n_{Li} n_M}$.

Hinsichtlich des Lichtwellenleiterverbinders wird die eingangs genannte Aufgabe dadurch gelöst, dass ein erster Lichtwellenleiterstecker, in welchem ein Endabschnitt eines ersten Lichtwellenleiters mit einer ersten Lichtwellenleiterstirnfläche gehalten ist, und ein zweiter Lichtwellenleiterstecker, in welchem ein Endabschnitt eines zweiten Lichtwellenleiters mit einer zweiten Lichtwellenleiterstirnfläche gehalten ist, vorgesehen ist. Dabei ist zwischen der ersten Lichtwellenleiterstirnfläche und der zweiten Lichtwellenleiterstirnfläche eine Linse derart angeordnet, dass ein aus der ersten Lichtwellenleiterstirnfläche austretender Lichtstrahl auf die zweite Lichtwellenleiterstirnfläche abgebildet wird.

Dabei ist es von Vorteil, wenn als erster Lichtwellenleiterstecker ein Lichtwellenleiterstecker vorgesehen ist, wie er vorgehend beschrieben worden ist.

Um die folgende Beschreibung des erfindungsgemäßen Lichtwellenleiterverbinder zu vereinfachen, wird auch im Folgenden lediglich der Fall beschrieben, dass ein Lichtsignal von dem als Hohlkernlichtwellenleiter ausgebildeten ersten Lichtwellenleiter bereitgestellt wird und auf die Austrittsfläche der Linse fokussiert wird. Als zweiter Lichtwellenleiter wird in dem im Folgenden beschriebenen Fall ein Vollkernlichtwellenleiter vorgesehen. Der Lichtwellenleiterverbinder kann aber auch in umgekehrter Signalübertragungsrichtung verwendet werden. Auch kann anstelle des Hohlkernlichtwellenleiters eine Monomode- oder Multimode-Glasfaser als erster Lichtwellenleiter vorgesehen sein.

Die Linse ist vorzugsweise derart angeordnet, dass sie die Vollkernstirnfläche berührt. Eine Antireflexbeschichtung kann dann auf der Austrittsfläche angeordnet sein. Hat die Linse einen Brechungsindex nu und der Kern des Vollkernlichtleiters einen Brechungsindex von $n_F$, so sollte der Brechungsindex $n_2$ der Antireflexschicht, die auf der Austrittsfläche aufgebracht ist,

$$n_{21} = \sqrt{n_F n_M}$$

ergeben.

Weiterhin kann eine Vorspannvorrichtung vorgesehen sein, welche die Ausgangsfläche der Linse gegen die Vollkernstirnfläche vorspannt.

In einer weiteren bevorzugten Ausführungsform wird als zweiter Lichtwellenleiter ein Vollkernlichtwellenleiter verwendet, dessen Kern einen Brechungsindex aufweist, welcher um nicht mehr als 10%, vorzugsweise um nicht mehr als 3% und am besten um nicht mehr als 1% von dem Brechungsindex der Linse abweicht.

So können beispielsweise bereits bekannte Lichtwellenleitersteckverbindungen, wie z.B. LC-Stecker, auch für die Verbindung von Vollkernlichtwellenleitern mit Hohlkernlichtwellenleitern oder für die Verbindung von Hohlkernlichtwellenleitern miteinander oder für die Verbindung von Vollkernlichtwellenleitern mit unterschiedlichen Felddurchmessern verwendet werden, wenn der LC-Stecker wie beschrieben ausgebildet ist.

Weitere Vorteile, Merkmale und Anwendungsmöglichkeiten der vorliegenden Erfindung werden deutlich anhand der folgenden Beschreibung einer bevorzugten Ausführungsform und der zugehörigen Figuren. Es zeigen:

Figur 1    eine Schnittansicht durch einen Lichtwellenleiterstecker mit Lichtwellenleiter,

Figur 2    eine Schnittansicht eines Grundelementes der Ausführungsform von Figur 1,

Figur 3    eine perspektivische Ansicht der Justiereinrichtung der Ausführungsform von Figur 1,

Figur 4    eine Schnittansicht durch das Grundelement mit eingesetzter Justiereinrichtung der Ausführungsform von Figur 1,

Figur 5    eine Ansicht wie in Figur 4, jedoch mit eingesetztem Lichtwellenleiter,

Figur 6    eine Schnittansicht durch eine alternative Ausführungsform eines Lichtwellenleitersteckers und

Figur 7    eine Schnittansicht durch einen Lichtwellenleiterverbinder.

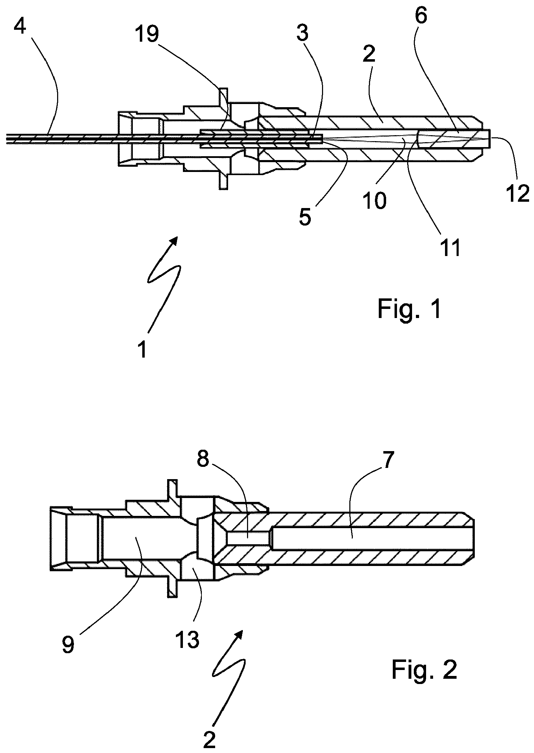

In Figur 1 ist eine bevorzugte Ausführungsform eines Lichtwellenleitersteckers 1 gezeigt. In dem Lichtwellenleiterstecker 1 ist ein Endabschnitt 3 eines Hohlkernlichtwellenleiters 4 angeordnet. Dieser Endabschnitt 3 wird in einem Durchgangskanal 7, 8, 9 (in Figur 2 gezeigt) gehalten. Weiterhin ist eine Linse 6 vorgesehen. Aus einer Stirnfläche 5 des Endabschnittes 3 des Hohlkernlichtwellenleiters 4 tritt ein Lichtstrahl bzw. ein Strahlenbündel 10 aus, der bzw. das sich in Richtung der Linse 6 verbreitert. Die Linse 6 ist derart ausgebildet, dass sie den Lichtstrahl 10, der auf eine Eintrittsfläche 11 der Linse 6 trifft, als konvergentes Strahlenbündel auf die Austrittsfläche 12 der Linse 6 projiziert und vorzugsweise fokussiert. Im besten Fall befindet sich die Austrittsfläche 12 im Fokus des konvergenten Strahlenbündels. Eine Anordnung außerhalb des Fokus ist auch möglich, auch wenn dies nachteilig ist.

In der gezeigten Ausführungsform ist eine Kapillare 19 vorgesehen, welche einen Teil des Endabschnittes 3 des Hohlkernlichtwellenleiters 4 umgibt. Auf die Kapillare 19 kann verzichtet werden. In diesem Fall wird der Durchgangskanal vorzugsweise gestuft ausgebildet.

Auch wenn anhand der bevorzugten Ausführungsform beschrieben wird, dass ein Lichtstrahl aus der Stirnfläche 5 des Endabschnittes 3 des Hohlkernlichtwellenleiters 4 austritt und auf die Eintrittsfläche 11 Linse 6 trifft, kann der Signallauf auch umgekehrt sein. Ein über die Austrittsfläche 12 der Linse 6 eingekoppeltes Signal kann auch auf die Stirnfläche 5 des Endabschnittes 3 abgebildet werden.

Die einzelnen Elemente des Lichtwellenleitersteckers sind in dem in Figur 2 gezeigten Grundelement 2 angeordnet. Das Grundelement 2 hat einen Durchgangskanal, welcher in der gezeigten Ausführungsform drei Abschnitte hat, nämlich einen vorderen Abschnitt 7, der dafür vorgesehen ist, die Linse 6 aufzunehmen, einen mittleren Abschnitt 8, der dafür vorgesehen ist, den Endabschnitt 3 des Hohlkernlichtwellenleiters 4 aufzunehmen und dessen Querschnitt gegenüber dem Querschnitt des vorderen Abschnittes 7 reduziert ist. Schließlich folgt noch ein hinterer Abschnitt 9 des Durchgangskanals, welcher wieder einen etwas größeren Querschnitt aufweist. Der hintere Abschnitt 9 ist von untergeordneter Bedeutung für die Erfindung und kann jeden beliebigen Querschnitt aufweisen.

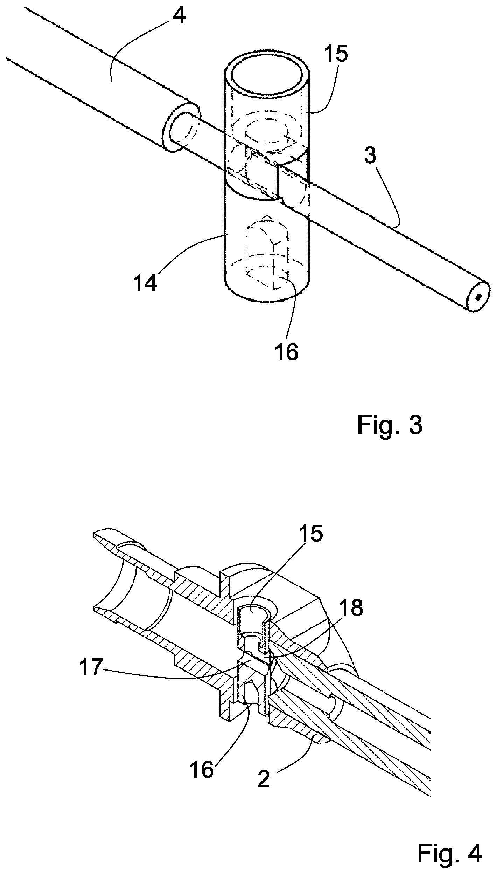

Weiterhin ist ein Querkanal 13 vorgesehen, über welchen von der Mantelfläche des Grundelements 2 Zugriff zu dem Durchgangskanal gewährt wird. In dem Querkanal 13 ist eine Justiervorrichtung 14, 15 angeordnet, die in Figur 3 gezeigt ist. Die Justiervorrichtung 14, 15 besteht aus zwei Elementen 14 und 15, welche im zusammengesetzten Zustand, wie er in Figur 3 zu sehen ist, eine Querbohrung bzw. eine quer verlaufende Ausnehmung aufweisen, durch die der Endabschnitt 3 der Hohlkernglasfaser 4 geführt werden kann. In dem gezeigten Beispiel hat das untere Element 14 der Justiervorrichtung eine in der Zeichnung angedeutete Handhabungsausnehmung 16, mit welcher die Justiervorrichtung 14, 15 in Richtung des Querkanals 13 bewegt und/oder um die Achse des Querkanals 13 gedreht werden kann. Das obere Element 15 kann ebenfalls eine Handhabungsausnehmung aufweisen. Dadurch kann der Endabschnitt 3 des Hohlkernlichtwellenleiters 4 relativ zum Grundelement 2 justiert werden. Sobald die Relativposition auf die gewünschte Position eingestellt ist, kann Klebstoff über die Öffnung des hülsenförmig ausgebildeten Teils 15 der Justiervorrichtung eingefüllt werden, sodass sich der Klebstoff durch die quer verlaufende Ausnehmung 18 in Richtung des Endabschnittes 3 verteilt und dort eine feste Verbindung zwischen Endabschnitt 3 und Grundelement 2 innerhalb des mittleren Abschnitts 8 des Durchgangskanals 7, 8, 9 erzeugt. Die Justiervorrichtung 14, 15 kann auch einteilig ausgebildet sein, wobei dann der Endabschnitt 3 durch die quer verlaufende Ausnehmung 18 der Justiervorrichtung 14, 15 geführt werden müsste. Die zweiteilige Ausbildung hat den Vorteil, dass die Montage des Wellenleitersteckers einfacher ist.

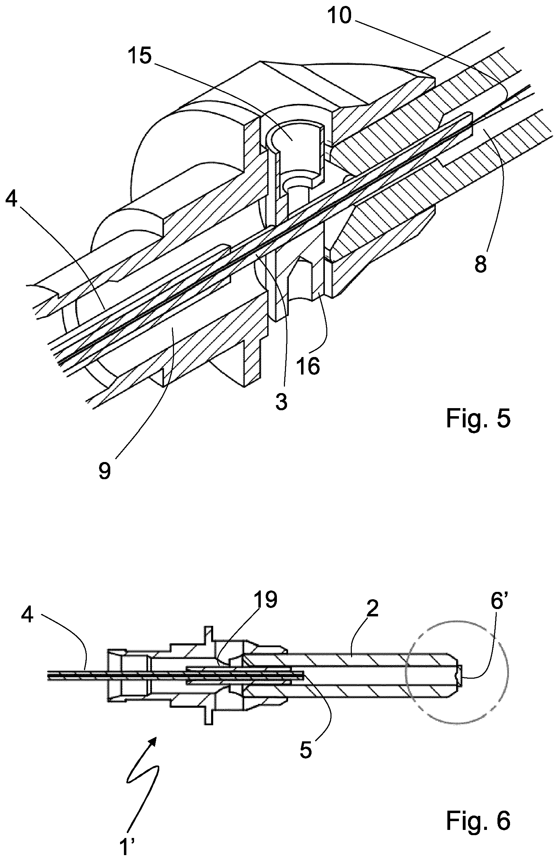

In den Figuren 4 und 5 sind zwei Teilschnittansichten des Grundelementes 2 mit eingesetzter Justiervorrichtung 14, 15 einmal ohne Lichtwellenleiter (Figur 4) und einmal mit Lichtwellenleiter (Figur 5) gezeigt, um die Anordnung des Endabschnittes 3 innerhalb der Justiervorrichtung 14, 15 besser erkennen zu können. Zu erkennen ist hier, dass die Justiervorrichtung 15, 16 eine quer verlaufende Bohrung 17 aufweist, in welche der Endabschnitt 3 eingeschoben werden kann. In Richtung des mittleren Abschnitts 8 des Durchgangskanals ist die quer verlaufende Bohrung 17 mit einer Ausnehmung 18 verbunden, durch welche der Klebstoff leicht aus dem hülsenartigen Element 15 austreten kann.

In Figur 6 ist eine alternative Ausführungsform eines Lichtwellenleitersteckers 1' gezeigt. Diese Ausführungsform entspricht im Wesentlichen der in Figur 1 gezeigten Ausführungsform, wobei jedoch eine alternativ ausgebildete Linse 6' vorgesehen ist. Diese Linse kann aus Quarzglas, Silizium oder SF11 hergestellt sein.

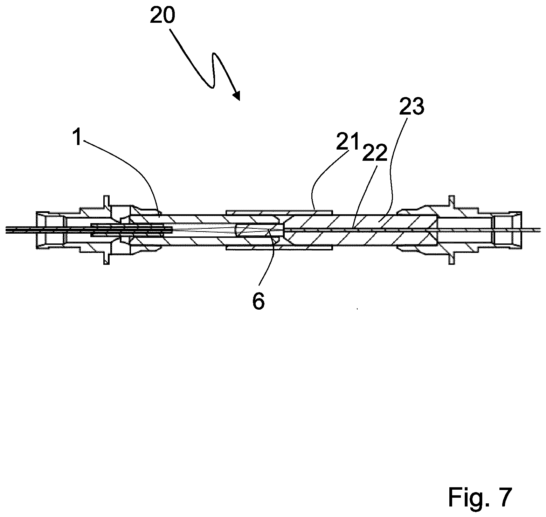

In Figur 7 ist ein Lichtwellenleiterverbinder 20 dargestellt. Im linken Teil der Figur 7 ist der in Figur 1 gezeigte Lichtwellenleiterstecker zu sehen. Im rechten Teil der Figur 7 ist ein Vollkernlichtwellenleiter 22 innerhalb einer Ferrule 23 angeordnet, wie dies aus den LC-Steckern des Standes der Technik bekannt ist. Die Ferrule 23 und der Lichtwellenleiterstecker 1 sind mit ihren Stirnflächen innerhalb einer Hülse 21 angeordnet. Dabei wird die Stirnfläche des Vollkernlichtwellenleiters 22 auf die Austrittsfläche 12 der Linse 6 gedrückt, sodass physikalischer Kontakt besteht.

## Bezugszeichenliste

| | |
|---|---|
| 1, 1' | Lichtwellenleiterstecker |
| 2 | Grundelement |
| 3 | Endabschnitt |
| 4 | Hohlkernlichtwellenleiter |
| 5 | Stirnfläche des Hohlkernlichtwellenleiters |
| 6, 6' | Linse |
| 7 | Durchgangskanal |
| 8 | Durchgangskanal |
| 9 | Durchgangskanal |
| 10 | Lichtstrahl |
| 11 | Eintrittsfläche |
| 12 | Austrittsfläche |
| 13 | Querkanal |
| 14 | Justiervorrichtung |
| 15 | Justiervorrichtung |
| 16 | Handhabungsausnehmung |
| 17 | Bohrung |
| 18 | Ausnehmung |
| 19 | Kapillare |
| 20 | Lichtwellenleiterverbinder |
| 21 | Vollkernlichtwellenleiter |
| 22 | Ferrule |

**Patentansprüche**

1. Lichtwellenleiterstecker für einen Lichtwellenleiterverbinder zum optischen Verbinden eines ersten Lichtwellenleiters mit einem zweiten Lichtwellenleiter, wobei der Lichtwellenleiterstecker einen Endabschnitt des ersten Lichtwellenleiters mit einer Lichtwellenleiterstirnfläche hält und eine Linse mit einer Eintrittsfläche, die dem ersten Lichtwellenleiter zugewandt ist, und einer Austrittsfläche, die dem ersten Lichtwellenleiter abgewandt ist, aufweist, wobei die Linse derart ausgebildet und angeordnet ist, dass ein aus dem ersten Lichtwellenleiter austretendes Strahlenbündel auf die Eintrittsfläche tritt und als konvergentes Strahlenbündel auf die Austrittsfläche projiziert wird.

2. Lichtwellenleiterstecker nach Anspruch 1, **dadurch gekennzeichnet, dass** die Linse derart ausgebildet und angeordnet ist, dass ein aus dem ersten Lichtwellenleiter austretendes Strahlenbündel auf die Eintrittsfläche trifft und auf die Austrittsfläche fokussiert wird.

3. Lichtwellenleiterstecker nach Anspruch 1 oder 2, **dadurch gekennzeichnet, dass** der Lichtwellenleiterstecker ein Grundelement mit einer Eingangs- und einer Ausgangsfläche, zwischen denen sich ein Durchgangskanal erstreckt, aufweist, wobei sowohl Endabschnitt des ersten Lichtwellenleiters als auch zumindest ein Abschnitt der Linse in dem Durchgangskanal angeordnet sind.

4. Lichtwellenleiterstecker nach Anspruch 3, **dadurch gekennzeichnet, dass** der Durchgangskanal zwei Abschnitte mit unterschiedlichem Querschnitt aufweist, wobei der Endabschnitt des ersten Lichtwellenleiters zumindest teilweise in dem Abschnitt mit kleinerem Querschnitt und die Linse in dem Abschnitt mit größerem Querschnitt angeordnet ist.

5. Lichtwellenleiterstecker nach Anspruch 3 oder 4, **dadurch gekennzeichnet, dass** die Linse vollständig im Durchgangskanal angeordnet ist, wobei vorzugsweise die Austrittsfläche der Linse den Durchgangskanal an der Ausgangsfläche bündig verschließt.

6. Lichtwellenleiterstecker nach einem der Ansprüche 3 bis 5, **dadurch gekennzeichnet, dass** das Grundelement einen Querkanal aufweist, welcher den Durchgangskanal schneidet, wobei vorzugsweise der Querkanal das Grundelement vollständig durchquert.

7. Lichtwellenleiterstecker nach Anspruch 6, **dadurch gekennzeichnet, dass** in dem Querkanal eine Justiervorrichtung zum Justieren des Endabschnittes des ersten Lichtwellenleiters angeordnet ist.

8. Lichtwellenleiterstecker nach Anspruch 7, **dadurch gekennzeichnet, dass** die Justiervorrichtung ein Hülsenelement mit einer Querbohrung aufweist, wobei der Endabschnitt des ersten Lichtwellenleiters durch die Querbohrung geführt ist, wobei vorzugsweise das Hülsenelement sowie der Durchgangskanal zumindest abschnittsweise in dem Bereich, in welchem der Endabschnitt des ersten Lichtwellenleiters angeordnet ist, mit Klebstoff gefüllt ist.

9. Lichtwellenleiterstecker nach einem der vorherigen Ansprüche, **dadurch gekennzeichnet, dass** die Stirnfläche des Hohlkernlichtwellenleiters und die Linse voneinander beabstandet angeordnet sind.

10. Lichtwellenleiterstecker nach einem der vorherigen Ansprüche, **dadurch gekennzeichnet**, das der erste Lichtwellenleiter ein Hohlkern-Lichtwellenleiter ist.

11. Lichtwellenleiterverbinder zum optischen Verbinden eines ersten Lichtwellenleiters mit einem zweiten Lichtwellenleiter, mit einem ersten Lichtwellenleiterstecker, in welchem ein Endabschnitt des ersten Lichtwellenleiters mit einer ersten Lichtwellenleiterstirnfläche gehalten ist, und einem zweiten Lichtwellenleiterstecker, in welchem ein Endabschnitt des zweiten Lichtwellenleiters mit einer zweiten Lichtwellenleiterstirnfläche gehalten ist, wobei zwischen der ersten Lichtwellenleiterstirnfläche und der zweiten Lichtwellenleiterstirnfläche eine Linse derart angeordnet ist, dass ein aus der ersten Lichtwellenleiterstirnfläche austretender Lichtstrahl auf die zweite Lichtwellenleiterstirnfläche abgebildet wird.

12. Lichtwellenleiterverbinder nach Anspruch 11, **dadurch gekennzeichnet, dass** als erster Lichtwellenleiterstecker ein Lichtwellenleiterstecker nach einem der Ansprüche 1 bis 10 vorgesehen ist.

13. Lichtwellenleiterverbinder nach Anspruch 11 oder 12, **dadurch gekennzeichnet, dass** die Linse derart angeordnet ist, dass sie die zweite Lichtwellenleiterstirnfläche berührt.

14. Lichtwellenleiterverbinder nach Anspruch 13, **dadurch gekennzeichnet, dass** eine Vorspannvorrichtung vorgesehen ist, welche die Ausgangsfläche der Linse gegen die zweite Lichtwellenleiterstirnfläche vorspannt.

Fig. 1

Fig. 2

Fig. 3

Fig. 4

10

15

4

8

16

3

9

Fig. 5

4

19

2

6'

5

1'

Fig. 6

Fig. 7

# EP 4 220 259 A1

Europäisches Patentamt  
European Patent Office  
Office européen des brevets

## EUROPÄISCHER RECHERCHENBERICHT

Nummer der Anmeldung

EP 23 15 2328

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2016/266324 A1 (AKABANE AYUMU [JP] ET AL) 15. September 2016 (2016-09-15) | 1,3-5, 9-14 | INV. G02B6/32 |
| Y | * Abbildung 1 *<br>* Abbildung 3 *<br>* Abbildung 2A * | 2,6-8 | G02B6/38 |
| A | US 2002/146211 A1 (STEVENS RICK C [US] ET AL) 10. Oktober 2002 (2002-10-10)<br>----- | 1-14 | |
| Y | EP 3 508 899 A1 (KONINKLIJKE PHILIPS NV [NL]) 10. Juli 2019 (2019-07-10)<br>* Abbildung 2b *<br>----- | 2 | |
| Y | US 2017/168244 A1 (RUBINO ROBERT [US] ET AL) 15. Juni 2017 (2017-06-15)<br>* Abbildung 3 *<br>----- | 2 | |
| Y | US 5 185 834 A (DAY LESLIE L [GB] ET AL) 9. Februar 1993 (1993-02-09)<br>* Abbildung 5 *<br>* Spalte 5, Zeile 1 - Zeile 4 *<br>----- | 6-8 | |
| | | | RECHERCHIERTE SACHGEBIETE (IPC) |
| A | US 2021/341682 A1 (ALKESKJOLD THOMAS TANGGAARD [DK] ET AL) 4. November 2021 (2021-11-04)<br>----- | 10 | G02B |

Der vorliegende Recherchenbericht wurde für alle Patentansprüche erstellt

| Recherchenort | Abschlußdatum der Recherche | Prüfer |
|---|---|---|
| Den Haag | 1. Juni 2023 | Verbandt, Yves |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 15 2328

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-06-2023

| Im Recherchenbericht angeführtes Patentdokument | Datum der Veröffentlichung | Mitglied(er) der Patentfamilie | Datum der Veröffentlichung |
|---|---|---|---|
| US 2016266324 A1 | 15-09-2016 | JP 2016170276 A | 23-09-2016 |
| | | US 2016266324 A1 | 15-09-2016 |
| US 2002146211 A1 | 10-10-2002 | KEINE | |
| EP 3508899 A1 | 10-07-2019 | EP 3508899 A1 | 10-07-2019 |
| | | WO 2019134953 A1 | 11-07-2019 |
| US 2017168244 A1 | 15-06-2017 | EP 3182182 A1 | 21-06-2017 |
| | | JP 2017111444 A | 22-06-2017 |
| | | US 2017168244 A1 | 15-06-2017 |
| US 5185834 A | 09-02-1993 | KEINE | |
| US 2021341682 A1 | 04-11-2021 | CA 3008919 A1 | 29-06-2017 |
| | | CN 108474914 A | 31-08-2018 |
| | | EP 3394652 A1 | 31-10-2018 |
| | | EP 4009087 A1 | 08-06-2022 |
| | | JP 7136695 B2 | 13-09-2022 |
| | | JP 2019504352 A | 14-02-2019 |
| | | JP 2022091752 A | 21-06-2022 |
| | | KR 20180098310 A | 03-09-2018 |
| | | SG 11201804707Y A | 30-07-2018 |
| | | US 2018372961 A1 | 27-12-2018 |
| | | US 2020310039 A1 | 01-10-2020 |
| | | US 2021341682 A1 | 04-11-2021 |
| | | US 2022269012 A1 | 25-08-2022 |
| | | WO 2017108060 A1 | 29-06-2017 |

EPO FORM P0461

Für nähere Einzelheiten zu diesem Anhang : siehe Amtsblatt des Europäischen Patentamts, Nr.12/82